# EUROPÄISCHE PATENTSCHRIFT

(11) **EP 1 042 962 B1**
(45) Veröffentlichungstag und Bekanntmachung des Hinweises auf die Patenterteilung: **16.10.2002**
(21) Anmeldenummer: 00106285.0
(22) Anmeldetag: 23.03.2000
(51) Int. Cl.: A23K 1/00, A23P 1/08

(54) **Verfahren zur Herstellung von Futtermittelkörnern**
Method of producing feedstuff granules
Procédé de préparation de granules d'aliments pour animaux

(30) Priorität: 06.04.1999 DE 19915438
(43) Veröffentlichungstag der Anmeldung: 11.10.2000
(73) Patentinhaber: SUET Saat- und Erntetechnik GmbH, D-37269 Eschwege (DE)
(72) Erfinder: Weber, Heinrich, Dr. Chem. Dipl.agr., 37242 Bad Sooden-Allendorf (DE); Fuss, Ernst-Otto, 37297 Berkatal-Hitzerode (DE); Gradert, Hansjörg, 23758 Kükelühn (DE)
(74) Vertreter: Freiherr von Schorlemer, Reinfried, Dipl.-Phys.

(56) Entgegenhaltungen:
- US-A- 5 270 064
- US-A- 5 433 961
- US-A- 5 650 184

## Beschreibung

Die Erfindung betrifft ein Verfahren nach der im Oberbegriff des Anspruchs 1 angegebenen Gattung zur Herstellung von Futtermittelkörnern.

Bei einem bekannten Verfahren dieser Art (DE 198 23 859) werden einzelne Getreide-, Hülsenfiirchte- oder Ölsaatkörner durch Form-Pressen oder Extrudieren mit einem Nährund/oder Wirkstoffe enthaltenden Mantel umgeben. Diese Futtermittelkörner werden an Tauben verfüttert, deren Nahrung aufgrund üblicher Zuchtgewohnheiten nach Art und Zusammensetzung nicht der in der freien Natur vorzufindenden Nahrung entspricht. Die in den Mänteln enthaltenen Nähr- und Wirkstoffe sollen sicherstellen, daß den Muskelmägen der Tauben nicht nur die erforderlichen Futterkörner, sondern zusammen mit diesen auch eine optimal abgestimmte Zusammensetzung an anderen für die Nahrung und das Wohlbefinden der Tauben wichtigen Stoffen zugeführt werden. Obwohl in diesem Zusammenhang insbesondere an Brief- und Rassetauben gedacht ist, können auf diese Weise natürlich auch andere Vögel und Geflügelarten wie z.B. Hühner, Enten oder Gänse gefüttert werden. Dabei wird davon ausgegangen, daß die bloße Zugabe von Nähr- und Wirkstoffen zum Futter nicht ausreicht, weil Tauben und anderes Geflügel ausgeprägte Freßschemata haben und daher die Nähr- und/oder Wirkstoffe nicht ohne weiteres in der erforderlichen Menge aufnehmen. Mit dem die Körner umgebenden Mantel wird dagegen erreicht, daß einerseits den Vögeln auf Spezies, Alter, Körperzustand, Zucht- und Leistungsziel od. dgl. abgestimmte Futter-, Nähr- und Wirkstoffe angeboten werden und andererseits die fertigen Futtermittelkörner trotz der Zusätze hinsichtlich Form, Farbe, Geschmack usw. in das Freßschema der jeweiligen Vögel passen und daher von diesen ohne weiteres aufgenommen werden.

Die Herstellung derartiger Futtermittel hat sich als komplexe Aufgabe erwiesen. Mit dem Mantel sind einerseits im Verhältnis zum Gewicht und zur Größe der Getreidekörner od. dgl. hohe Mengen an Nähr- und Wirkstoffen aufzutragen, die untereinander und auf den Bedarf der Tiere mit nur geringen Abweichungen abzustimmen sind. Andererseits müssen die fertigen Futtermittelkörner wegen der genannten Freßschemata in der Regel stabil, glatt und staubfrei sein und in Form, Oberflächenstruktur und Farbe im wesentlichen der Beschaffenheit der natürlichen, keinen Mantel aufweisenden Körner entsprechen.

Diese komplexe Aufgabe kann durch das bekannte Form-Pressen oder Extrudieren nicht zufriedenstellend gelöst werden, weil hierdurch die Nähr- und Wirkstoffe weder in ausreichend genauen, statistisch nur wenig streuenden Zusammensetzungen noch in genau dosierten Mengen an die Basiskörner anzubringen sind. Außerdem können die zur Aufnahme durch die Vögel od. dgl. wichtigen Formen und Oberflächenbeschaffenheiten der Futtermittelkörner beim Pressen oder Extrudieren nur durch eine für die Nahrungsmittel schädliche Erhöhung des Drucks und der Temperatur erhalten werden, während nachträgliche Ausrundungen der ummantelten Futtermittelkörner zu unerwünschtem Abrieb und Bruch führen.

Auch andere bekannte Verfahren zur Herstellung von Futtermitteln unter Anwendung von Getreide-, Hülsenfrüchte- oder Ölsaatkörnern können hier nicht weiterhelfen, da sie beispielsweise zu einer unerwünschten Zerstörung der natürlichen Körner durch Quetschen (CH 685 225 A5) oder Mahlen (US-PS 2 945 764) führen. Bei einem weiteren bekannten Verfahren (DE 1 492 883 A1) werden Hirsekörner mit einer ein Antibiotikum enthaltenden Flüssigkeit durchtränkt,und noch ein anderes bekanntes Verfahren (DE 26 47 562 B2) sieht eine Umhüllung von aus Muschelschalen, Quarzsteinen und Kalkstein bestehenden Granulatkörnern mit einem Wirkstoffe enthaltenden Bindemittel nach einer nicht näher beschriebenen Methode vor. Keines dieser bekannten Verfahren ist dazu geeignet oder bestimmt, die oben erläuterten, weitgehend den Freßschemata der Tiere entsprechenden Futtermittelkörner herzustellen und die Nähr- und Wirkstoffe innerhalb der Mäntel ausreichend genau zu dosieren. Andere Verfahren sind auch aus US 5 650 184 und US 5 433 961 (für Lebensmittel) bekannt.

Demgegenüber liegt der Erfindung die Aufgabe zugrunde, das Verfahren der eingangs bezeichneten Gattung dahingehend zu verbessern, daß Futtermittelkörner erhalten werden, die stabil und mit einer für übliches Körnerfutter ausreichend glatten Oberfläche versehen sind und deren Mäntel eine vorgewählte, von Korn zu Korn statistisch nur wenig schwankende Zusammensetzung an Nähr- und Wirkstoffen enthalten. Dabei sollen auch die Anforderungen seitens der Ernährungsphysiologie erfüllt werden, nämlich daß die biologischen Eigenschaften der Getreidekörner und dgl., wie in erster Linie der Erhalt der Keimungseigenschaften, weitestgehend erhalten bleiben.

Zur Lösung dieser Aufgabe dienen die kennzeichnenden Merkmale des Anspruchs 1.

Weitere vorteilhafte Merkmale der Erfindung ergeben sich aus den Unteransprüchen.

Durch die Erfindung werden inhomogene Zusammensetzungen sowie Drücke und Temperaturen, die die Qualität der Futtermittelkörner gefährden könnten, vermieden. Das erfindungsgemäße Verfahren stellt vielmehr durch bisher bei der Futtermittelherstellung nicht angewendete Techniken des Aufpillierens bzw. des Dragierens eine kontrollierbar exakte und homogene Zusammensetzung der Nähr- und Wirkstoffe in den Mänteln dadurch sicher, daß die Nähr- und/oder Wirkstoffe zuvor auf eine geeignete Feinkörnung gemahlen und homogen miteinander vermischt werden und daß dann genau abgewogene Mengen der vermischten Nähr- und/oder Wirkstoffe auf eine vorbestimmte Anzahl von Körnern aufgebracht werden, während diese in einem geeigneten Behälter, vorzugsweise in einer Dragiertrommel, umgewälzt werden.

Zum gleichförmigen Aufbringen der Nähr- und/oder Wirkstoffe auf die Kerne wird beispielsweise die Mischung mit einer vorgewählten Menge an Bindemittel vermischt. Anschließend werden abwechselnd Teilmengen der Gesamtmischung und von Wasser auf die vorzugsweise permanent umgewälzten Kerne aufgestreut bzw. aufgesprüht, bis die vorgewählte Menge der Nähr- und/oder Wirkstoffe vollständig auf die Kerne aufgebracht worden ist.

Überraschend gelingt es mit dem erfindungsgemäßen Verfahren, die Ummantelung bei verhältnismäßig niedrigen Temperaturen und Drücken durchzuführen, die fertigen Futtermittelkörner durch geringen Druck und durch Friktion zu glätten und das beim Form-Pressen bzw. Extrudieren durch erhöhte Temperaturen, Scherung oder Quetschung bestehende Qualitätsrisiko zu vermeiden. Die Oberflächenstruktur der Futtermittelkörner kann dabei durch die Art und Zusammenstellung der Komponenten und deren Vermahlungsgrad, die gewählte Füllmenge in dem Behälter bzw. der Dragiervorrichtung sowie die Dauer und die Wasserzugabe beim Dragiervorgang mit einer bestimmbar geringen Verdichtung geglättet werden. Bei einem Bedarf an höheren Wasserzugaben können diese nach der Fertigstellung der Futtermittelkörner durch deren Trocknung bei niedriger Temperatur produktschonend wieder entfernt werden, bis die zur Lagerung und/oder Anwendung der Futtermittelkörner geeignete Feuchte erreicht ist.

Als Bindemittel wird erfindungsgemäß vorzugsweise ein solches verwendet, das ganz oder überwiegend aus einer Komponente oder einem Auszug des jeweiligen Futtermittels besteht, d.h. das Bindemittel ist vorzugsweise von derselben Art wie die Kerne und/oder die Nähr- und/oder Wirkstoffe der jeweiligen Futtermittelkörner. Werden als Kerne z.B. Weizen- oder Maiskörner verwendet, können als Bindemittel Weizenmehle oder Maisstärken verwendet werden. Alternativ kann das Bindemittel auch ganz oder teilweise aus einem anderen Futtermittel für die jeweiligen Tiere bestehen oder aus einem solchen Futtermittel gewonnen werden. Umfangreiche Versuche haben gezeigt, daß artfremde, insbesondere nicht in der natürlichen Nahrung vorkommende Bindemittel bei einem sparsamen Einsatz zu einer mangelnden Festigkeit des Mantels, bei genügender Dosierung dagegen zur Ablehnung durch die zu fütternden Tiere führen können, sei es wegen eines ungewohnten (Fremd-) Geruchs oder (Fremd-) Geschmacks oder wegen einer abweichenden Struktur oder Konsistenz der Futtermittelkörner oder ihrer Oberflächen. Bindemittel, die zur natürlichen Nahrungskette gehören oder aus dieser gewonnen werden, werden nach einer besonders bevorzugten Ausführungsform der Erfindung in die berechnete Zusammensetzung der jeweiligen Futtermittelkörner einbezogen, indem der Mischung aus Nähr- und/oder Zusatzstoffen und/oder dem beim Dragiervorgang aufzusprühenden Wasser vorbestimmte Mengen des Bindemittels zugesetzt werden. Dadurch ergibt sich der zusätzliche Vorteil, daß das Bindemittel als eine Teilmenge der gewünschten Kerne bzw. Natur- und/oder Wirkstoffe betrachtet bzw. bei der Dosierung der Füttermengen einfach in den gewünschten Gehalt an Kern- und Mantelmaterialien des fertigen Futtermittelkorns eingerechnet werden kann. Der dadurch erzielte Vorteil besteht vor allem darin, daß Geflügel- und Vogelzüchter od. dgl. in der das jeweilige Futtermittel kennzeichnenden Spezifikation keine Fremdstoffe, sondern nur zur natürlichen Nahrung der Tiere gehörende Stoffe vorfinden.

Das Bindemittel kann in vollem Umfang der Mischung aus Nähr- und/oder Wirkstoffen zugesetzt werden. Alternativ ist es aber auch möglich, das Bindemittel ganz oder teilweise in dem während des Dragiervorgangs aufzusprühenden Wasser zu lösen oder zu suspendieren und ggf. in diesem anzuquellen. Hierdurch würde sich der weitere Vorteil ergeben, daß das Volumen der auf die Körner aufzutragenden, pulverförmigen Komponenten vermindert wird, was eine schnelle und homogenere Auftragung ermöglicht.

Bei der Zugabe von Bindemittel zu Wasser ist die Bindemittel-Konzentration zweckmäßig nach der Wassermenge auszurichten, die bei einem gegebenen Anpreßdruck der Körnerfüllung in einer Dragiervorrichtung zum Ziel der gewünschten Glättung der Korn- und Oberflächenstrukturen führt. Sie wird zweckmäßig anhand von Versuchen berechnet, die im Einzelfall zu erfolgreichen Proben führen. In kleinen Dragierkesseln von 300-600 mm Durchmesser haben sich Wasserdosierungen auf 40 - 35 % Wassergehalt des Futtermittels, bei größeren in Kesseln ab 1.200 mm Durchmesser bis zu 30 % als ausreichend erwiesen.

Die Endtrocknung erfolgt beispielsweise nach Verteilung einer Körnercharge auf einem Fließbett-Trockner unter Fluidisierung der Körner mit Warmluft von nicht mehr als 38 °C, bis der vorgegebene Wassergehalt von z.B. 11 Gew. % unterschritten ist.

Die Nähr- und/oder Wirkstoffe werden zweckmäßig auf eine Feinkörnung der Hauptmasse von kleiner als 0,3 mm vermahlen, wobei geringe Mengen mit Korngrößen bis 0,4 mm zugelassen werden können, noch größere Korngrößen jedoch abzulehnen sind. Mit besonderem Vorteil ist die Körnung kleiner oder gleich 0,3 mm und größer oder gleich 0,05 bis 0,1 mm. Hierdurch wird vor allem erreicht, daß glatte Oberflächen erhalten werden, keine unerwünschten Stäube entstehen und der Dragiervorgang homogen abläuft. Besonders vorteilhaft sind Körnungen, deren beide Haupt-Fraktionen zwischen 0,1 mm bis 0,3 mm liegen bzw. kleiner als 0,1 mm sind und jeweils fast 50 Gew. % aufweisen, wobei nur sehr geringe Mengen (maximal 3 Gew. %) zwischen 0,3 mm bis höchstens 0,4 mm vorhanden sind.

Als Nährstoffe kommen im Rahmen der vorliegenden Erfindung insbesondere Kohlehydrate, Proteine, Öle und Fette zur Anwendung. Wirkstoffe können dagegen je nach Bedarf Vitamine, Mineralstoffe, Spurenelemente und Aminosäuren, aber auch z.B. Rohfasern, Arzneimittel, Farbstoffe oder Stärkungsmittel sein.

Die Basiskörner bestehen aus Getreide-, Hülsenfrüchte- oder Ölsaatkörnern.

Wird als Basiskorn z.B. Taubenweizen und als Bindemittel ein Weizenmehl verwendet, können die Hauptkomponenten "Weizen" und "Zusätze" je nach Fütterungsziel z.B. in Verhältnissen, jeweils auf Gewichtsprozente bezogen, von 60 : 40, 70 : 30, 80: 20 od. dgl. angewendet werden. Die Hauptkomponenten "Weizen" und "Zusätze" werden beispielsweise in folgenden drei Zusammensetzungen verwendet:

| | | | | |
|---|---|---|---|---|
| Weizen : Zusatz = | 60 : 40 | 70 : 30 | 80 : 20 | (jeweils in Gewichts-%) |
| Weizenkörner | 40 | 55 | 70 | |
| Vormischung | 40 | 30 | 20 | |
| Bindemittel | 20 | 15 | 10. | |

Danach berechnet sich der Weizenanteil hier aus der Summe der Körner- und Bindemittelanteile.

Die Ummantelung der Weizenkörner erfolgt dadurch, daß eine vorgegebene Menge der Nähr- und Wirkstoffe und des Bindemittels enthaltende Mischung, aufgeteilt in gleichlange Takte, alternierend mit ebenso vielen Wassersprühungen auf die Kerne aufgetragen wird. Nach Beendigung des Auftragens wird die Charge auf einem Fließbett-Trockner unter Fluidisierung der Futtermittelkörner mit Warmluft (38 °C) bis auf eine Feuchte entsprechend einem Wassergehalt von weniger als 11 Gew. % getrocknet. Dabei versteht sich, daß die angegebenen Basiskörner, Nähr- und/oder Wirkstoffe sowie Bindemittel nur Beispiele darstellen und daß in Abhängigkeit vom jeweiligen Tier und Fütterungsziel auch andere Stoffe und Mischungsverhältnisse gewählt werden können. Wesentlich größere Verhältnisse als 60 : 40 sollten jedoch vermieden werden, damit die Durchmesser der Futtermittelkörner nicht zu groß werden, was dem jeweiligen Freßschema zuwiderläuft.

Bei Bedarf ist es weiter möglich, den Futtermittelkörnern ölige Pflanzenextrakte als Energiekonzentrat und/oder als Geruchs- bzw. Geschmackssupplement aufzusprühen. Dies erfolgt bevorzugt vor dem Aufstreuen der Mischung aus Nähr- und/oder Wirkstoffen.

### Beispiel 1

Es wird die erfindungsgemäße Herstellung von Taubenfutter anhand einer Charge von 175 kg Trockenfutter beschrieben. Die Vormischung aus Nähr- und Wirkstoffen wird getrennt vom Bindemittel aufgebracht.

### Ausgangsmaterialien

| | | |
|---|---|---|
| Kerne | 70 kg | Taubenweizen-Körner. |
| Nähr- und Wirkstoffe | 70 kg | handelsübliches "Alleinfutter Legehennen" und Vitamine, Mineralstoffe, Spurenelemente gemäß dem "Ergänzungsfuttermittel für Tauben" der Fa. Muskator. |
| Bindemittel | 35 kg | handelsübliches Weizenmehl Typ 1050. |

Die Nähr- und Wirkstoffe werden vorgemischt und mit einer Leistung von ca. 300 - 400 kg/h auf einer Mühle "Pallmann Contraselector PPSR 8" zerkleinert. In der Mühle-Ausstattung mit vier Mahlsegmenten und Siebblechen 3 mm-Masche sowie acht Schlagleisten entstehen Korngrößenspektren von etwa

| | | | | |
|---|---|---|---|---|
| Fraktionen: | > 0,4 mm | 0.4-0.25 mm | 0.25-0.1 mm | < 0.10 mm |
| Partikel (Gew.%) | < 10 % | 4.4-18.6 % | 21-25,6 % | 45 - 69.7 % |

Ein oberhalb von 3 % liegender Anteil der Fraktion > 0,4 mm wird zur erneuten Vermahlung abgesiebt.

Zur Herstellung der Ummantelung werden ein Dragierkessel mit einem Durchmesser von 1600 mm (ovaler Querschnitt) und eine Flachstrahldüse mit einem Durchsatz von ca. 1,5 Liter Wasser pro Minute verwendet, die senkrecht auf die Körnerschüttung gerichtet wird.
1. Dragierstufe: Anfeuchten der Körner mit ca. 2,5 kg Wasser = ca. 100 sec.
2. Dragierstufe: Aufteilen von 17,5 kg Weizenmehl in 3 - 4 Portionen, Aufstreuen im Wechsel mit Befeuchtungen von je ca. 3 Ltr. Wasser (= 2 min Besprühung).
3. Dragierstufe: Aufteilen der Vormischung in fünf Portionen zu je 17 kg und Aufstreuen im Wechsel mit Befeuchtungen von je ca. 6 Ltr. Wasser (= ca. 4 min Besprühung).
4. Dragierstufe wie 2. Dragierstufe mit 17,5 kg Weizenmehl mit je 1,5 min Wasser.
5. Dragierstufe: Einige Minuten Nachlauf ohne Wasserzugabe.

Dauer der Dragierung ca. 55 Minuten, Gesamtzugabe Wasser ca. 52,5 Ltr = 30 %.

Die anschließende Trocknung erfolgt in einem Fließbett-Durchlauftrockner und/oder einem Hordentrockner mit 25 - 30 mm Schütthöhe, wobei die Zuluftmenge so eingestellt ist, daß die Körner leicht wirbeln und die Produkt-Höchsttemperatur bei 38 °C liegt. Die Tocknungsdauer beträgt je nach Außenluftfeuchte ca. 3 - 5 Stunden, wobei ein Wassergehalt von 11 % erreicht wird.

### Beispiel 2

Es werden dieselben Ausgangsmaterialien und Geräte wie im Beispiel 1 verwendet. Ein Unterschied besteht nur darin, daß das Bindemittel vor dem Aufbringen auf die Kerne homogen mit der Vormischung vermischt wird.
1. Dragierstufe: Anfeuchten der Körner mit ca. 2,5 kg Wasser = ca. 100 sec.
2. Dragierstufe: Aufteilen der Vormischung von 70 kg Nähr- und Ergänzungsstoffen und 35 kg Weizenmehl = 105 kg in 7 - 8 Portionen zum Aufstreuen gefolgt von Besprühungen ä 7 - 8 Ltr Wasser (4,5 - 5,3 min), außer nach der letzten Portion.
3. Dragierstufe: 2 - 3 Minuten Nachlauf ohne weitere Wasserzugabe.

Dauer der Dragierung ca. 45 Minuten, Gesamtzugabe Wasser ca. 50 Ltr = 28,5 %.

Die anschließende Trocknung erfolgt wie im Beispiel 1.

Die erfindungsgemäße Herstellung von Futtermittelkörnern ist nicht auf eine bestimmte Art, Form oder Zusammensetzung der Kerne oder der Mantelmaterialien und auch nicht auf bestimmte Fütterungs- oder Tierbereiche beschränkt. Sie erzeugt naturnahe Körner mit vorherzubestimmenden Nährwerten und Zusammensetzungen. Insbesondere können die erfindungsgemäßen Futtermittelkörner auch z.B. im Heimtiersektor für Nager und im Landwirtschaftsbereich für die Aufzucht von Ferkeln, Lämmern od. dgl. angewendet werden, wobei die Zusammensetzung der Nähr- und/oder Wirkstoffe und die Wahl der Kerne jeweils den speziellen Bedürfnissen angepaßt werden können. Auch die bei der Ummantelung der Körner verwendeten Parameter können in Abhängigkeit von den Bedürfnissen schwanken. Außerdem versteht sich, daß die erfindungsgemäßen Merkmale auch in anderen als den beschriebenen Kombinationen verwendet werden können.

## Patentansprüche

1. Verfahren zur Herstellung von Futtermittelkörnern, bei dem einzelne Kerne, insbesondere Getreide-, Hülsenfrüchte- oder Ölsaatkörner, mit einem Mantel umgeben werden, der in einer vorgewählten Zusammensetzung Nähr- und/oder Wirkstoffe enthält, **dadurch gekennzeichnet, daß** vorgewählte Mengen der Nähr- und/oder Wirkstoffe auf eine vorgewählte Feinheit gemahlen und zu einer homogenen Mischung vermischt werden, eine vorbestimmte Anzahl der Kerne in einem Behälter umgewälzt und unter Anwendung eines Bindemittels durch abwechselndes Aufsprühen von Wasser und Aufstreuen der Mischung mit dem Mantel überzogen wird und die so erhaltenen Futtermittelkörner dann auf eine zu ihrer Lagerung und/oder Anwendung geeignete Feuchte getrocknet werden.

2. Verfahren nach Anspruch 1, **dadurch gekennzeichnet, daß** das Bindemittel der Mischung und/oder dem aufzusprühenden Wasser zugesetzt wird.

3. Verfahren nach Anspruch 1 oder 2, **dadurch gekennzeichnet, daß** ein Bindemittel verwendet wird, das von derselben Art wie die Kerne und/oder die Nähr- und/oder Wirkstoffe ist oder zu einem natürlichen Nahrungsmittel gehört und/oder aus einem solchen gewonnen wird.

4. Verfahren nach Anspruch 3, **dadurch gekennzeichnet, daß** das Bindemittel in die berechnete Zusammensetzung der Futtermittelkörner einbezogen wird, indem der Mischung und/oder dem aufzusprühenden Wasser vorbestimmte Mengen des Bindemittels zugesetzt werden.

5. Verfahren nach einem der Ansprüche 1 bis 4, **dadurch gekennzeichnet, daß** die Nährund/oder Wirkstoffe vorzugsweise auf eine Körnung gemahlen werden, deren Fraktionen von 0,1 mm bis 0,3 mm und von kleiner als 0,1 mm jeweils etwa 50 Gew. % der Partikel enthalten und nur sehr geringe Mengen (maximal 3 Gew. %) zwischen 0,3 mm bis höchstens 0,4 mm liegen.

6. Verfahren nach einem der Ansprüche 1 bis 5, **dadurch gekennzeichnet, daß** den Kernen zusätzlich ölige Pflanzenextrakte aufgesprüht werden.

7. Verfahren nach Anspruch 6, **dadurch gekennzeichnet, daß** die öligen Pflanzenextrakte vor dem Aufstreuen der Mischung aufgesprüht werden.

## Claims

1. Method for producing feedstuff granules, in which individual kernels, in particular cereals, pulses or oleaginous seed granules, are surrounded with a casing, which contains nutrients and/or active substances in a pre-selected composition, **characterised in that** pre-selected quantities of nutrients and/or active substances are ground to a pre-selected fineness and are mixed to a homogenous mixture, a predetermined number of the kernels is circulated in a container and, using a binder, is covered with the casing by alternate spraying of water and spreading of the mixture and the thus obtained feedstuff granules are then dried to a moisture which is suitable for storage thereof and/or application thereof.

2. Method according to claim 1, **characterised in that** the binder is added to the mixture and/or to the water to be sprayed on.

3. Method according to claim 1 or 2, **characterised in that** a binder is used which is of the same type as the kernels and/or the nutrients and/or the active substances or belongs to a natural foodstuff and/or is obtained from such a foodstuff.

4. Method according to claim 3, **characterised in that** the binder is included in the calculated composition of the feedstuff granules, predetermined quantities of binder being added to the mixture and/or to the water to be sprayed on.

5. Method according to one of the claims 1 to 4, **characterised in that** the nutrients and/or the active substances are ground preferably to a granulation, the fractions of which from 0.1 mm to 0.3 mm and from less than 0.1 mm contain respectively approximately 50% by weight of the particles and only very small quantities (maximum 3% by weight) lie between 0.3 mm to at most 0.4 mm.

6. Method according to one of the claims 1 to 5, **characterised in that** in addition oleaginous plant extracts are sprayed onto the kernels.

7. Method according to claim 6, **characterised in that** the oleaginous plant extracts are sprayed on before spreading of the mixture.

## Revendications

1. Procédé de préparation de granules d'aliments pour animaux, selon lequel des granules individuels, en particulier des granules de céréales, de légumes secs ou de graines oléagineuses, sont enveloppés d'une gaine, qui comporte des substances nutritives et/ou actives dans une composition présélectionnée, **caractérisé en ce que** des quantités présélectionnées des substances nutritives et/ou actives sont broyées à une finesse présélectionnée et mélangées en un mélange homogène, un nombre prédéfini des granules est brassé dans un réservoir et est revêtu de la gaine en utilisant un liant, par aspersion alternative d'eau et saupoudrage du mélange, et les granules d'aliments pour animaux ainsi obtenus sont ensuite déshydratés à une humidité adaptée à leur stockage et/ou utilisation.

2. Procédé suivant la revendication 1, **caractérisé en ce que** le liant est ajouté au mélange et/ou à l'eau à asperger.

3. Procédé suivant l'une des revendications 1 et 2, **caractérisé en ce qu'**un liant utilisé est de la même nature que les granules et/ou les substances nutritives et/ou actives, ou fait partie d'un produit alimentaire naturel et/ou est obtenu à partir d'un tel produit.

4. Procédé suivant la revendication 3, **caractérisé en ce que** le liant est intégré à la composition calculée des granules d'aliments pour animaux, des quantités prédéfinies du liant étant ajoutées au mélange et/ou à l'eau à asperger.

5. Procédé suivant l'une des revendications 1 à 4, **caractérisé en ce que** les substances nutritives et/ou actives sont broyées de préférence à une grosseur de grain, dont les fractions de 0,1 mm à 0,3 mm et de moins de 0,1 mm comportent respectivement environ 50% en poids des particules, et seules de très faibles quantités (au maximum 3% en poids) se situent entre 0,3 mm et 0,4 mm au maximum.

6. Procédé suivant l'une des revendications 1 à 5, **caractérisé en ce que** des extraits de plantes oléagineux sont pulvérisés en supplément sur les granules.

7. Procédé suivant la revendication 6, **caractérisé en ce que** les extraits de plantes oléagineux sont pulvérisés avant le saupoudrage du mélange.
